**Europäisches Patentamt**

**European Patent Office**

**Office européen des brevets**

(19)

(11) Veröffentlichungsnummer: **0 049 870**
**A1**

(12) # EUROPÄISCHE PATENTANMELDUNG

(21) Anmeldenummer: **81108084.5**

(22) Anmeldetag: **08.10.81**

(51) Int. Cl.³: **H 02 H 5/08**

(30) Priorität: **09.10.80 DE 3038101**

(43) Veröffentlichungstag der Anmeldung:
**21.04.82 Patentblatt 82/16**

(84) Benannte Vertragsstaaten:
**AT CH DE FR GB IT LI NL SE**

(71) Anmelder: **Lauerer, Friedrich**
**Ohmstrasse 11**
**D-8000 München 40(DE)**

(72) Erfinder: **Lauerer, Friedrich**
**Ohmstrasse 11**
**D-8000 München 40(DE)**

(54) **Fehlerstromschutzeinrichtung.**

(57) Die Fehlerstromschutzeinrichtung vermeidet das Bestehenbleiben von gefährlichen Berührungsspannungen, wenn in elektrische Betriebsmittel Flüssigkeiten eindringen. Sie soll hauptsächlich gegen den Stromtod in Badewannen (z.B. durch Haartrockner) eingesetzt werden. Die Schutzeinrichtung besteht aus einem im Betriebsmittel (3) eingebauten Schalter (6), der bei Wassereinwirkung die Netzzuleitung kurzschließt und auf diese Weise die vorgeschaltete Sicherung (2) zur Abschaltung bringt. Als Kurzschlußschalter kann beispielsweise ein Triac (6) dienen. Die in das Betriebsmittel eindringende Flüssigkeit überbrückt die drei Anschlußstellen des Triacs (6). Auf diese Weise entsteht ein Spannungsteiler, wobei die zwischen Gitter (8) und Kathode auftretende Teil-Netzspannung den Triac (6) zündet und so die Kurzschließung der Netzzuleitung bewirkt.

EP 0 049 870 A1

# Fehlerstromschutzeinrichtung

Wird ein elektrisches Betriebsmittel, dessen Gehäuse nicht hermetisch abgeschlossen ist, einer Flüssigkeit ausgesetzt, dann wird die Spannung vom Geräteinnern über die leitende Flüssigkeit an die Gehäuseaußenfläche übertragen. Bei direkter oder indirekter Berührung über die umgebende Flüssigkeit besteht für den Benutzer Lebensgefahr. Diese Gefahr ist insbesondere beim Hantieren mit elektrischen Geräten (z.B. Haartrocknern) in oder in der Nähe von Badewannen oder Waschbecken gegeben. In der Statistik der tödlichen Stromunfälle im Haushalt steht der Stromtod durch Haartrocknern in Badezimmern zahlenmäßig an der Spitze.

Die Erfindung hat die Aufgabe, das Bestehenbleiben einer gefährlichen Berührungsspannung zu verhindern, wenn elektrische Betriebsmittel einer leitenden Flüssigkeit ausgesetzt sind. Sie ist dadurch gekennzeichnet, daß zwischen den spannungsführenden Leitern ein Schalter liegt, der bei Flüssigkeitseinwirkung den Stromkreis kurzschließt und die vorgeschaltete Sicherung zum Ansprechen bringt.

Durch die in den Unteransprüchen angeführten weiteren Erfindungsgedanken bzw. Maßnahmen wird eine vorteilhafte Weiterentwicklung und Verbesserung des im Hauptanspruch angegebenen Erfindungsgedanken möglich.

0049870

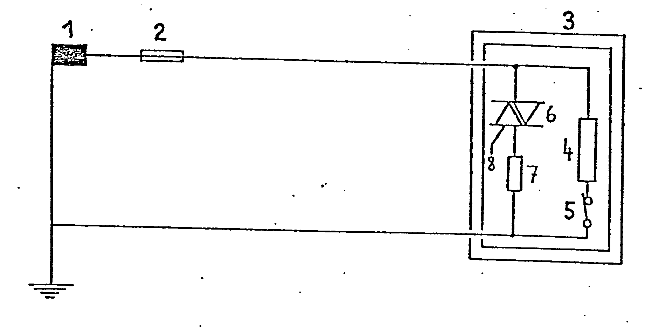

In der Zeichnung ist ein Ausführungsbeispiel wiedergegeben.
Der Netztransformator 1 speist über die Sicherung 2 das Verbrauchsgerät 3 mit seinem Widerstand 4. Innerhalb des Gehäuses
des Verbrauchsgerätes 3 ist ein Triac 6 zwischen den spannungsführenden Leitern und zwar vor dem Geräteschalter 5 geschaltet.
In Reihe liegt gegebenenfalls ein strombegrenzender Widerstand
7. Der Gitteranschluß 8 bleibt frei. Wird das Gerät in Wasser
getaucht, dann bildet das eingedrungene Wasser einen Spannungsteiler von der Anode zum Gitter und hier weiter zur Kathode.
Auf diese Weise wird der Triac 6 über das Gitter gezündet und
er schaltet zum Kurzschluß durch. Die folge ist, daß die vorgeschaltete Sicherung 2 abschaltet und die Berührungsgefahr
dadurch beseitigt wird. Um eine Abschaltung auch dann zu gewährleisten, wenn nur ein Teil des Verbrauchsgerätes in die
Flüssigkeit eintaucht, werden Leitungen von den Anschlußstellen des Kurzschlußschalters auch zu den anderen Teilen im
Innern des Verbrauchsgerätes geführt.

Dipl.-Ing. Friedrich Lauerer
Ohmstraße 11, 8000 München 40
München, den 27.4.1981
LPa34b/2 0049870

## Patentansprüche

1. Fehlerstromschutzeinrichtung gegen das Bestehenbleiben von Berührungsspannungen bei mit leitender Flüssigkeit benetzten Betriebsmitteln, dadurch gekennzeichnet, daß zwischen den spannungsführenden Leitern ein Schalter (6) liegt, der bei Flüssigkeitseinwirkung den Stromkreis kurzschließt und die vorgeschaltete Sicherung (2) zum Ansprechen bringt.

2. Einrichtung nach Anspruch 1, dadurch gekennzeichnet, daß im nicht zum Betriebsstromkreis gehörenden Teil des Kurzschlußstromkreises ein Heißleiter geschaltet ist.

3. Einrichtung nach Anspruch 1 oder 2, dadurch gekennzeichnet, daß der Kurzschlußschalter so ausgelegt ist, daß er bei Überbeanspruchung einen bleibenden inneren Kurzschluß erfährt, dadurch, daß sein Widerstand so klein und sein Querschnitt (incl. Zuleitung) so groß ist, daß er den maximal möglichen Kurzschlußstrom standhält, ohne selbst eine Unterbrechung zu erfahren.

4. Einrichtung nach einem der vorhergehenden Ansprüche, dadurch gekennzeichnet, daß als Kurzschlußschalter ein Reedkontaktschalter oder ein steuer- bzw. schaltbarer Halbleiter verwendet wird.

5. Einrichtung nach einem der vorhergehenden Ansprüche, dadurch gekennzeichnet, daß die oder nur eine der beiden Reedkontaktzungen bzw. die oder nur ein Teil der Halbleiterelektroden ein relativ großes Volumen haben und ganz oder teilweise aus einem leicht schmelzbaren Metall bestehen.

6. Einrichtung nach einem der vorhergehenden Ansprüche, dadurch gekennzeichnet, daß der Kurzschlußschalter in einem berstsicherem Gehäuse untergebracht ist.

7. Einrichtung nach einem der vorhergehenden Ansprüche, dadurch gekennzeichnet, daß der Kurzschlußschalter (6) im Elektro- bzw. Verbrauchsgerät (3) selbst eingebaut ist und derselbe mittels Flüssigkeitssensor ausgelöst wird.

0049870

8. Einrichtung nach Anspruch 7, dadurch gekennzeichnet, daß als Kurzschlußschalter ein Thyristor oder ein Triac (6) verwendet wird, der mit der Anode an dem einen und mit der Kathode an dem anderen Leiter angeschlossen ist, wobei der Gitteranschluß (8) frei bleibt oder zusammen mit den anderen Halbleiteranschlüssen auch zu anderen Stellen des Gerätes geführt ist.

1/1

## Europäisches Patentamt
## EUROPÄISCHER RECHERCHENBERICHT

Nummer der Anmeldung

EP 81 10 8084

### EINSCHLÄGIGE DOKUMENTE

KLASSIFIKATION DER ANMELDUNG (Int. Cl.³)

H 02 H 5/08

| Kategorie | Kennzeichnung des Dokuments mit Angabe, soweit erforderlich, der maßgeblichen Teile | betrifft Anspruch |
|---|---|---|
| X | ELECTRONIC DESIGN, Band 28, Nr. 6, Februar 1980, ROCHELLE PARK (US) J. CLIFTON: "Paper towel sensor protects PC boards from conductive fluid spills", Seite 300 <br><br> * insgesamt * <br> --- | 1,3-5, 7 |
| | DE - A - 2 801 358 (SCHNEIDER) <br><br> * Seite 4, Zeile 1 bis Seite 5, Zeile 17; Abbildungen 1 und 2 * <br> --- | 2 |
| | US - A - 4 103 319 (CRAIN et al.) <br><br> * Spalte 2, Zeile 27 bis Spalte 4, Zeile 39; Abbildungen 1,2,5 * <br> --- | 1-4,8 |
| | US - A - 3 858 089 (POINDEXTER) <br><br> * insgesamt * | 4 |

RECHERCHIERTE SACHGEBIETE (Int. Cl.³)

H 02 H 5/08
3/02

KATEGORIE DER GENANNTEN DOKUMENTE

X: von besonderer Bedeutung allein betrachtet
Y: von besonderer Bedeutung in Verbindung mit einer anderen Veröffentlichung derselben Kategorie
A: technologischer Hintergrund
O: nichtschriftliche Offenbarung
P: Zwischenliteratur
T: der Erfindung zugrunde liegende Theorien oder Grundsätze
E: älteres Patentdokument, das jedoch erst am oder nach dem Anmeldedatum veröffentlicht worden ist
D: in der Anmeldung angeführtes Dokument
L: aus andern Gründen angeführtes Dokument

&: Mitglied der gleichen Patentfamilie, übereinstimmendes Dokument

Der vorliegende Recherchenbericht wurde für alle Patentansprüche erstellt

| Recherchenort | Abschlußdatum der Recherche | Prüfer |
|---|---|---|
| Den Haag | 13.01.1982 | RUGGIU |

EPA form 1503.1  06.78